Europäisches Patentamt

European Patent Office

Office européen des brevets

(19)

(11) Numéro de publication : **0 238 483**
**B1**

(12) **FASCICULE DE BREVET EUROPÉEN**

(45) Date de publication du fascicule du brevet :
24.01.90

(51) Int. Cl.$^5$ : **B 60 C 23/00, G 05 D 16/00**

(21) Numéro de dépôt : 85904832.4

(22) Date de dépôt : 04.10.85

(86) Numéro de dépôt international :
**PCT/FR 85/00276**

(87) Numéro de publication internationale :
**WO/8701991 (09.04.87 Gazette 87/08)**

(54) DISPOSITIF DE COMMANDE DE PRESSION HYDRAULIQUE OU PNEUMATIQUE ET APPLICATION AUX DISPOSITIFS DE REGLAGE DE LA PRESSION DE PNEUMATIQUES DE VEHICULES EN MARCHE.

(43) Date de publication de la demande :
30.09.87 Bulletin 87/40

(45) Mention de la délivrance du brevet :
24.01.90 Bulletin 90/04

(84) Etats contractants désignés :
AT BE CH DE GB IT LI LU NL SE

(56) Documents cités :
CH–A– 165 923
DE–A– 3 247 371
FR–A– 1 087 762
FR–A– 1 129 903
FR–A– 2 568 345
US–A– 2 715 430
US–A– 3 037 544

(73) Titulaire : LABINAL
5 Avenue Newton
F-78370 Montigny le Bretonneux (FR)

(72) Inventeur : LE CHATELIER, Robert
117, rue l'Abbé Groult
F-75015 Paris (FR)
Inventeur : DIEFENBACH, Jean-Jacques
4, rue de Bellevue
F-95110 Sannois (FR)

(74) Mandataire : Lemoine, Michel Cabinet Lemoine et Bernasconi et al
13 Boulevard des Batignolles
F-75008 Paris (FR)

EP 0 238 483 B1

Jouve, 18, rue St-Denis, 75001 Paris, France

## Description

La présente invention a trait à un dispositif de commande de pression hydraulique ou pneumatique permettant de régler, diminuer ou augmenter la pression dans une chambre telle qu'un vérin ou un pneumatique de véhicule. L'invention a également trait à l'application de ce dispositif au réglage de pression, gonflage et dégonflage de pneumatique sur des véhicules en marche.

Il existe déjà divers dispositifs, du genre électrovannes ou distributeurs, permettant de régler la pression dans une chambre telle que par exemple un vérin ou un pneumatique.

Ces dispositifs n'ont que des possibilités limitées ou alors présentent des complications en raison de leur complexité et de la nécessité d'insérer des commandes électriques in situ.

Dans le cas notamment de la commande et du réglage de la pression dans des pneumatiques de véhicules en marche, il est particulièrement avantageux d'utiliser un dispositif de commande de pression fonctionnant uniquement à l'aide de moyen de commande par fluide sous pression, par exemple de l'air comprimé dans le cas d'un véhicule, de préférence à partir d'une seule source de pression telle que par exemple, un compresseur.

Ainsi, le brevet allemand DE-A-3 247 371 décrit un dispositif de commande de pression de pneumatique de véhicule, du type destiné à être interposé entre une source de pression, le pneumatique formant chambre d'utilisation, et un échappement, pour permettre d'assurer, à volonté, l'envoi de fluide sous pression dans le pneumatique et l'évacuation du fluide sous pression vers l'échappement. Ce dispositif est constitué d'un agencement de plusieurs éléments comprenant, sur la partie fixe du véhicule, des moyens permettant d'adresser soit une pression de gonflage, soit une pression, plus faible, d'échappement, vers la roue portant le pneumatique, par l'intermédiaire d'un joint tournant. L'agencement sur la roue comporte, outre un capteur de pression, une vanne pilotée à partir de la canalisation d'amenée de pression sur la roue, un clapet anti-retour et un conduit d'échappement à étranglement vers l'air atmosphérique, cet assemblage étant agencé de façon que, alors que la canalisation de roue est normalement à la pression atmosphérique, l'envoi d'une pression importante dans la canalisation permet de vaincre la résistance du clapet non-retour pour gonfler le pneumatique tandis que l'envoi d'une autre pression à une valeur relativement basse permet d'ouvrir l'échappement et de dégonfler le pneumatique. Ce dispositif ne permet cependant pas d'assurer un dégonflage rapide, car non seulement il n'est pas réalisé dans un seul corps, ce qui augmente la longueur des passages d'air sous pression, mais encore, il nécessite un étranglement au niveau de l'échappement afin de freiner suffisamment le dégonflage. En outre, il nécessite l'installation, au niveau du pneumatique, d'un capteur de pression, ce qui pose des problèmes de transmissions de la valeur détectée de pression entre la roue et les moyens d'exploitation sur le châssis du véhicule.

L'invention a donc pour objectif de remédier à ces inconvénients et de fournir un dispositif de commande de pression hydraulique ou pneumatique, notamment applicable aux dispositifs de réglage de la pression de pneumatique d'un véhicule en marche, permettant, uniquement à l'aide de moyens de commande par fluide sous pression, de préférence à partir d'une seule source de pression, de régler, augmenter ou diminuer très rapidement la pression, et ceci de façon simple et fiable.

Un autre objectif de l'invention est de fournir un tel dispositif susceptible de fonctionner dans des conditions extrêmement difficiles d'environnement, température, humidité, poussière, chocs, vibrations, givre notamment.

Un autre objectif de l'invention est de fournir un tel dispositif qui ne nécessite pas la présence permanente d'une pression de commande ou d'alimentation.

Un autre objectif de l'invention est de réaliser un dispositif permettant, par exemple sur des pneumatiques, de réaliser l'étanchéité avec un seul clapet et donc d'obtenir un niveau de sécurité comparable à une valve de gonflage classique.

Un autre objectif encore de l'invention est de garantir une fiabilité très élevée du fonctionnement de l'échappement afin de permettre un échappement rapide et, dans le cas d'utilisation sur des pneumatiques de véhicule, un dégonflage rapide du pneumatique.

Un autre objectif encore de l'invention est de réaliser un tel dispositif dont la purge soit facile.

Un autre objectif encore de l'invention est de fournir un tel dispositif qui soit simple et peu onéreux.

L'invention a pour objet un dispositif de commande de pression hydraulique ou pneumatique, du type destiné à être interposé entre une source de pression, une chambre d'utilisation et un échappement, pour permettre d'assurer, à volonté, l'envoi de fluide sous pression dans ladite chambre ou réservoir, et l'évacuation du fluide sous pression depuis ledit réservoir vers l'échappement, et comportant un premier orifice destiné à être relié à la source de pression, un second orifice destiné à être relié au réservoir d'utilisation, et un troisième orifice d'échappement, des moyens sensibles à une première pression de pilotage, de valeur basse, pour relier le réservoir d'utilisation à l'échappement, et des moyens sensibles à une pression, de valeur élevée, pour mettre ledit second orifice en communication avec une source de pression et interdire une communication entre ledit orifice et l'orifice d'échappement, caractérisé en ce qu'il comporte, dans un corps muni desdits trois orifices et contenant lesdits moyens, un large passage d'échappement situé entre lesdits second orifice et troisième orifice et débouchant rapidement à l'extérieur, la communication entre ledit passage et ledit second orifice, respectivement troisième orifice étant contrôlée par des moyens de vanne ou clapet, respectivement dont l'un est normalement fermé, ainsi qu'une communication entre ledit premier orifice et ledit second orifice contrôlée par un moyen de vanne ou clapet normalement fermé et dont l'ouverture est contrôlée par des moyens de contrôle sensibles à la pression par ledit premier orifice.

De préférence, lesdits moyens sont agencés de façon telle que la basse pression ou la pression élevée soit adressée au dispositif par un seul orifice, en l'occurrence le premier orifice reliant le dispositif à la source de pression.

Lesdits moyens sensibles précités peuvent être par exemple des tiroirs usuellement utilisés dans le domaine hydraulique ou pneumatique mais de préférence lesdits moyens comportent des clapets ou valves commandés par membranes.

De préférence, le troisième orifice ou orifice d'échappement est normalement à l'état fermé par exemple par un clapet, ledit clapet étant sensible, pour son ouverture, à la pression établie dans une chambre de commande de clapet susceptible d'être reliée, de préférence au niveau dudit premier orifice, aux moyens établissant la pression basse.

En conséquence, à l'état normal, c'est-à-dire lorsque aucune pression de valeur basse n'est adressée au dispositif, le clapet d'échappement reste fermé et l'orifice d'échappement se trouve protégé contre les souillures, et le risque de détérioration et de givrage.

Dans une forme de réalisation préférée, le dispositif comprend un nombre limité de chambres devant être purgées, lesdites chambres étant en liaison avec ledit premier orifice de façon à pouvoir être purgées par une purge générale d'une canalisation reliée audit premier orifice.

Dans le cas précité où le clapet d'échappement est normalement fermé, le dispositif peut ne comporter qu'une seule chambre à purger, à savoir la chambre de commande du clapet d'échappement.

De façon avantageuse, un passage entre le premier orifice destiné à être relié à la source de pression, et le second orifice destiné à être relié au réservoir d'utilisation ou pneumatique, est normalement fermé par un clapet, soumis à une action de fermeture telle que la première pression de valeur basse, est incapable de provoquer son ouverture, de sorte que ladite valeur de pression basse est adressée uniquement à la chambre de commande du clapet d'échappement.

De façon particulièrement avantageuse, de second orifice relié au pneumatique, est relié au clapet d'échappement par un passage d'échappement normalement ouvert mais susceptible d'être refermé par un clapet insensible à la première pression, basse, de pilotage, mais sensible à la seconde pression de valeur élevée, pour le gonflage, et ce clapet peut, de façon particulièrement simple et économique, être mécaniquement solidaire du clapet obturant le passage entre le premier orifice et le second orifice, le passage entre le premier orifice et le second orifice étant ainsi fermé, lorsque le passage entre le second orifice et l'orifice d'échappement est ouvert et inversement.

Ce dispositif peut être réalisé de façon particulièrement simple en utilisant des clapets à membrane et, ce, par exemple avec une seule membrane prise entre deux parties de boîtier venant se disposer l'une contre l'autre de part et d'autre de la membrane, avec dans un premier espace interne convenable, s'ouvrant sur l'échappement, le clapet d'échappement situé d'un côté de la membrane et la chambre de commande de clapet d'échappement située de l'autre côté, et dans un second espace interne, un double clapet, l'un disposé d'un côté de la membrane pour obturer le premier orifice relié à la source de pression et l'autre de l'autre côté pour pouvoir, lorsqu'il est déplacé, obturer le passage entre le second orifice et l'échappement.

En conséquence, lorsque l'on veut provoquer le gonflage, l'établissement de la pression élevée provoque d'abord l'ouverture du clapet d'échappement et un bref échappement, faisant diminuer la pression sous le clapet normalement ouvert reliant le second orifice à l'orifice d'échappement alors que le clapet obturant le passage entre le premier orifice et le second orifice s'ouvre, de sorte que dans le même mouvement, le clapet associé vient fermer le passage entre le second orifice et l'échappement, après quoi, grâce à un retard provoqué par une perte de charge ou une conformation convenable du passage entre le premier orifice et le second orifice, la pression élevée de gonflage parvient au second orifice.

Le bref échappement ainsi provoqué permet un nettoyage du passage et du clapet d'échappement.

Dans une forme de réalisation différente de l'invention, le dispositif comporte un clapet d'utilisation, normalement fermé, de préférence par l'action d'un ressort, pour obturer ledit deuxième orifice ou orifice d'utilisation, ledit clapet étant sensible à l'action d'une pression, basse ou élevée, établie dans une chambre de commande du clapet reliée directement au premier orifice d'admission, un clapet d'échappement normalement ouvert mais susceptible d'obturer ledit troisième orifice ou orifice d'échappement pour fermer un passage entre l'orifice d'échappement et le clapet d'utilisation débouchant dans ledit second orifice, normalement obturé par le clapet d'utilisation, un clapet de pilotage normalement fermé pour obturer un passage entre le premier orifice ou orifice d'admission et une chambre de pilotage du clapet d'échappement, et un clapet taré obturant normalement un passage entre le premier orifice ou orifice d'admission et le second orifice ou orifice d'utilisation, mais pouvant être ouvert lorsque la pression à l'admission est suffisante, et ceci après que le clapet d'échappement a été amené dans sa position fermée.

Conformément à l'invention, à l'état de repos, le clapet d'utilisation, le clapet taré et le clapet de pilotage sont fermés alors que le clapet d'échappement est ouvert. Si l'on envoie une impulsion de basse pression par le premier orifice, l'établissement de cette basse pression, qui se répercute dans la chambre de commande du clapet d'utilisation, provoque l'ouverture dudit clapet d'utilisation tandis que le clapet taré reste fermé, la pression étant insuffisante pour l'ouvrir, alors que le clapet de pilotage reste également fermé, la pression étant insuffisante pour l'ouvrir. Le clapet d'échappement étant donc ouvert, l'air sous pression du réservoir d'utilisation peut s'évacuer à travers le second orifice par le passage conduisant au troisième pour une diminution de pression ou même une purge complète.

Si au contraire on adresse une pression élevée par le premier orifice, on obtient, comme précédemment, l'ouverture du clapet d'utilisation mais également, dans un premier temps, l'ouverture du clapet de pilotage, ce qui amène la pression à la chambre active de commande du clapet d'échappement, provoquant la fermeture de ce dernier clapet de sorte que l'échappement n'est plus possible. La valeur de la pression continuant à augmenter à l'admission, le clapet taré s'ouvre à son tour et l'orifice d'admission se trouve alors relié au second orifice d'utilisation, permettant d'adresser le fluide sous pression dans le réservoir d'utilisation par l'intermédiaire du second orifice qui n'est plus obturé par le clapet d'utilisation. La suppression de la pression élevée par le premier orifice permet de ramener le dispositif à l'état de repos.

De préférence, comme cela a été dit, les clapets sont pilotés par des membranes disposées dans des chambres actives tendant à provoquer le déplacement de la membrane et l'ouverture de son clapet d'utilisation, une chambre de commande du clapet de pilotage, et une chambre de commande du clapet d'échappement pour provoquer la fermeture dudit clapet, le clapet taré pouvant, pour sa part, être dépourvu de membrane et être actionné directement du fait qu'il ne doit être sensible qu'à l'action de la pression élevée lorsque celle-ci s'est pleinement établie.

Dans une forme de réalisation préférée, le dispositif peut encore comporter différentes canalisations de purge interne pour purger les chambres mortes disposées du côté des faces inactives des membranes et un clapet de non-retour disposé sur ces canalisations pour les protéger, ainsi que les chambres mortes, des impuretés extérieures.

Les différentes valves ou membranes sont maintenues dans leur position normale, en l'absence de pression basse ou élevée, grâce à des ressorts de rappel usuels.

L'invention peut être appliquée à différentes utilisations, telles que par exemple la commande et le réglage d'un vérin.

Conformément à l'invention, le dispositif peut aussi être appliqué au réglage de la pression des pneumatiques de véhicules en marche.

On connait déjà différents dispositifs pour le réglage de la pression de pneumatiques de véhicules en marche.

Ainsi le brevet français 2 357 388, au nom de WABCO WESTINGHOUSE, décrit un dispositif régulateur en marche, dans lequel les différents pneumatiques sont reliés, par l'intermédiaire de canalisations à joints tournant dans l'axe des roues, à un distributeur constitué d'une électrovanne complexe. Ce dispositif ne permet pas le réglage des différents pneumatiques indépendamment les uns des autres. Surtout, il nécessite un gonflage ou dégonflage par intermittence afin de pouvoir mettre chaque fois le système dans un état stable afin de pouvoir mesurer la valeur de la pression et, comparent cette valeur à la valeur souhaitée, poursuivre le réglage jusqu'à l'obtention de la concordance.

Le brevet français 2 499 476 ROBERT BOSCH décrit un dispositif se proposant de remédier à cet inconvénient. Ce dispositif est complexe et comporte un assez grand nombre d'électrovannes ainsi qu'un comparateur pneumatique afin d'établir constamment une comparaison entre la pression dans les canalisations centrales et la valeur indiquée à l'avance. De plus, il nécessite une centralisation de la purge et présente une grande complexité au niveau des canalisations.

Le brevet français 2 507 971 ROBERT BOSCH décrit un dispositif similaire adapté à la régulation de la pression dans chacun des pneumatiques individuels, avec les mêmes inconvénients que le dispositif précité.

Le brevet français 2 503 639 THE BUDD COMPANY décrit un dispositif de régulation de la pression dans les pneumatiques de véhicules, présentant l'inconvénient de nécessiter la présence en permanence d'une pression dans les canalisations et les joints tournant des essieux creux, avec une usure rapide de ces joints.

Le brevet français 2 465 602 BENNES MARREL décrit également un dispositif de ce genre à pilotage d'un clapet anti-retour de roue au moyen d'une canalisation de pilotage pneumatique. Ce dispositif nécessite donc l'utilisation d'une double canalisation et de plus, pour des raisons de lecture de la pression, il prévoit de maintenir la pression constamment à l'intérieur de l'ensemble des canalisations, avec les conséquences sur l'usure des joints tournants.

Le brevet US 2 685 906 Selden T. WILLIAMS décrit un dispositif de réglage de la pression d'air individuellement dans les différents pneumatiques, dans lequel la mesure de la pression nécessite la présence de l'air comprimé dans les conduites fixes alors que la purge ne peut être effectuée que par l'intermédiaire des canalisations fixes par retour vers le distributeur.

L'invention se propose de remédier à ces inconvénients et de fournir, grâce à l'application du dispositif de commande selon l'invention, un dispositif de réglage de la pression des pneumatiques de véhicules en marche qui soit simple, fiable, susceptible de fonctionner dans des conditions extrêmes d'environnement, température, humidité, qui économise les joints tournants au niveau des essieux, qui permette un réglage rapide de la pression dans le pneumatique pouvant éliminer les étapes de mesure de pression dans les canalisations et qui supprime la nécessité, au niveau des différentes roues individuelles, de circuits de commande particuliers, pneumatiques ou électriques.

L'invention a de préférence pour objet l'application du dispositif de commande selon l'invention au réglage de la pression de pneumatiques de véhicules en marche, de préférence en disposant un tel dispositif pour chacune des roues devant faire l'objet d'un réglage déterminé, le ou les dispositifs étant reliés chacun, par des canalisations, à des moyens de commande centraux susceptibles d'être pilotés par l'opérateur et reliés à une source d'air ou de fluide sous pression, lesdits moyens de commande centraux étant agencés pour pouvoir établir dans lesdites canalisations trois états, à savoir un état de repos dans lequel les canalisations sont à la pression ambiante, par exemple atmosphérique, un état de basse pression différente de la pression ambiante et un état de pression élevée correspondant à la pression de gonflage.

De façon avantageuse, chaque pneumatique muni d'un dispositif selon l'invention, est relié, de préférence par une canalisation unique et une vanne de sélection, à des moyens établissant la première pression de pilotage de valeur basse, par exemple par l'intermédiaire d'un clapet anti-retour, à des moyens établissant la pression de valeur élevée, et à des moyens de purge, un organe de mesure de pression pouvant être avantageusement disposé en aval du clapet anti-retour.

Ces différents moyens peuvent être regroupés en un seul ensemble mais on peut également relier la canalisation provenant du pneumatique d'une part à une électrovanne de basse pression, d'autre part à une électrovanne de haute pression, la purge pouvant être assurée par l'une ou l'autre vanne. De préférence, la canalisation provenant du pneumatique est reliée alternativement à l'une ou l'autre de ces électrovannes par une vanne de sélection. De façon avantageuse, un clapet anti-retour peut être prévu sur le trajet vers celle des électrovannes qui ne commande pas la purge, notamment pour éviter des transferts d'un pneumatique vers l'autre.

Des mesures de pression peuvent être prévues soit par l'intermédiaire d'un capteur monté sur la roue du pneumatique et des moyens de couplage, tels que définis dans le brevet français 2 497 342, soit par l'intermédiaire de capteurs montés sur le châssis du véhicule au niveau de la canalisation fixe provenant du pneumatique.

Les différents organes de mesure sont avantageusement reliés à un calculateur central de commande qui pilote les différentes électrovannes du système et lit les mesures pour commander le dégonflage ou le gonflage.

Le calculateur peut ainsi lire, dès le début du dégonflage, la pression existant dans le pneumatique et il en déduit le temps nécessaire du dégonflage. A la fin de ce temps, il supprime la première pression de pilotage et purge la voie concernée, et le dégonflage s'arrête sans qu'un réajustement soit, en général, nécessaire.

Le temps de gonflage est moins bien contrôlé, en raison des fluctuations possibles de la source de pression, et on préfère donc s'arrêter de gonfler au bout d'un certain temps calculé, après quoi on réajuste s'il le faut.

D'autres avantages et caractéristiques de l'invention apparaîtront à la lecture de la description suivante, faite à titre d'exemple non limitatif et se référant au dessin annexé dans lequel :

La figure 1 représente une vue schématique en coupe d'un dispositif selon l'invention.

La figure 2 représente une vue schématique de dessus montrant en fait les différents passages pratiqués dans ce dispositif.

La figure 3 représente une vue schématique d'une installation sur un véhicule.

La figure 4 représente une vue schématique du calculateur de commande de cette canalisation.

La figure 5 représente une vue schématique d'un dispositif selon une autre forme de réalisation de l'invention.

La figure 6 représente une vue schématique du calculateur de commande de cette dernière installation.

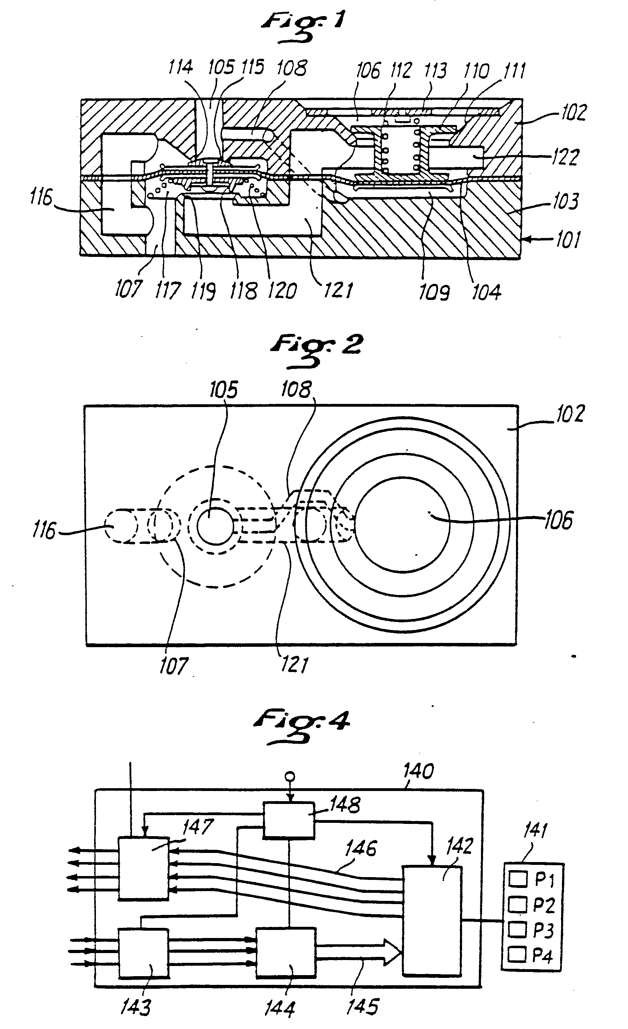

On se réfère tout d'abord aux figures 1 et 2.

Le dispositif représenté peut être constitué sous forme d'un boîtier de forme sensiblement rectangulaire 101 formé en fait de deux demi-boîtiers 102, 103, entre lesquels vient se prendre une membrane élastique 104. La partie de boîtier 102 comporte un premier orifice 105 destiné à être relié à des moyens d'établissement de pression susceptibles d'établir trois niveaux de pression, à savoir la pression ambiante, une première pression de pilotage de valeur basse, par exemple supérieure à la pression ambiante, et une deuxième pression de gonflage supérieure à la précédente. La partie de boîtier 102 présente également l'orifice d'échappement 106 alors que la partie de boîtier 103 présente le second orifice 107 relié au réservoir d'utilisation, par exemple le pneumatique du véhicule.

Le premier orifice 105 est relié par un passage 108, traversant la membrane 104 à une chambre 109 située sous la membrane, dans la partie de boîtier 103 et destinée à commander l'ouverture d'un clapet 110 ou clapet d'échappement normalement repoussé sur son siège 111 par un ressort 112 prenant appui sur une portée 113 disposée au milieu du passage d'échappement 106 où elle est supportée par des bras radiaux usuels entre lesquels se trouvent des espaces formant le passage d'échappement 106 proprement dit.

Le premier orifice 105 se termine par un siège 114 sur lequel s'appuie normalement un clapet 115 porté par la membrane 104. Ce clapet 115 obture ainsi la liaison entre l'orifice 105 et un passage 116 dont on voit qu'il présente une forme coudée, ledit passage 116 traversant la membrane 104 et pénétrant dans l'orifice 107. Cet orifice 107 aboutit d'autre part dans un espace normalement ouvert 117, sous un clapet 118, susceptible de coopérer avec un siège 119, avec un ressort 120 s'opposant à la fermeture du clapet 118. Le volume 117 est relié par un passage de grosse section 121 au clapet 110, la taille de celui-ci étant d'autre part prévue pour que l'échappement par le passage de grosse section 121, puis le clapet, soit très rapide.

Le fonctionnement est alors le suivant :

Lorsque le premier orifice 105 est à la pression ambiante, c'est-à-dire la pression atmosphérique, les différents clapets se trouvent dans la position représentée sur la figure 1. La pression régnant dans le pneumatique du véhicule, par exemple de l'ordre de trois bars, est établie d'une part dans l'espace 117 et dans le passage 116, et d'autre part dans le passage 121 et son débouché 122 au niveau du clapet 110. Le ressort 120 maintient également le clapet 115 fermé et, par conséquent, le clapet 118 est ouvert.

Pour provoquer un dégonflage, on adresse à l'orifice 105 une faible pression, par exemple de l'ordre de 0,5 bar. Cette pression agit sur le clapet 115 mais est insuffisante pour vaincre le ressort 120, la pression de part et d'autre de la membrane, au niveau des clapets 115 et 118, s'équilibrant d'une part dans la chambre 117 et d'autre part dans le débouché du passage 116 au-dessus de la membrane 104. Par contre, cette première pression établie dans la chambre 109 est suffisante pour vaincre le ressort 112 de sorte que le clapet 110 s'ouvre et on assiste, en raison des grosses sections de passage, à un échappement rapide et à une diminution de pression tout aussi rapide dans le pneumatique. Lorsque l'on supprime la première pression de valeur basse, l'orifice 105 est remis à la pression atmosphérique et le clapet 110 se referme, la chambre 109 se trouvant mise à la purge par l'intermédiaire de l'orifice 105 et de la canalisation reliée à cet orifice.

Pour provoquer le gonflage, on établit dans l'orifice 105 une seconde pression de valeur élevée, par exemple de 6 bars. Cette pression est suffisante pour vaincre le ressort 120 et l'on assiste à l'ouverture du clapet 115. Simultanément, l'augmentation de pression est transmise à la chambre 109 et le clapet d'échappement 110 s'ouvre. L'air sous pression dans la chambre 117 et le passage 121 s'échappe, provoquant une diminution de pression sous le clapet 118. Ceci produit une accélération du mouvement des clapets 115 et 118 et le clapet 118 vient se fermer. Le clapet d'échappement reste toujours ouvert mais aucun échappement ne se produit plus. A ce moment, en raison du retard pris par la configuration coudée du passage 116, la pression élevée aboutit au second orifice 107 et le gonflage du pneumatique commence. Lorsque l'on interrompt la pression de valeur élevée et qu'on remet l'orifice 105 à la pression atmosphérique, le gonflage s'interrompt et les différents clapets reprennent leurs positions normales représentées sur la figure 1, la chambre 109 se trouvant alors purgée par le conduit 108 et l'orifice 105.

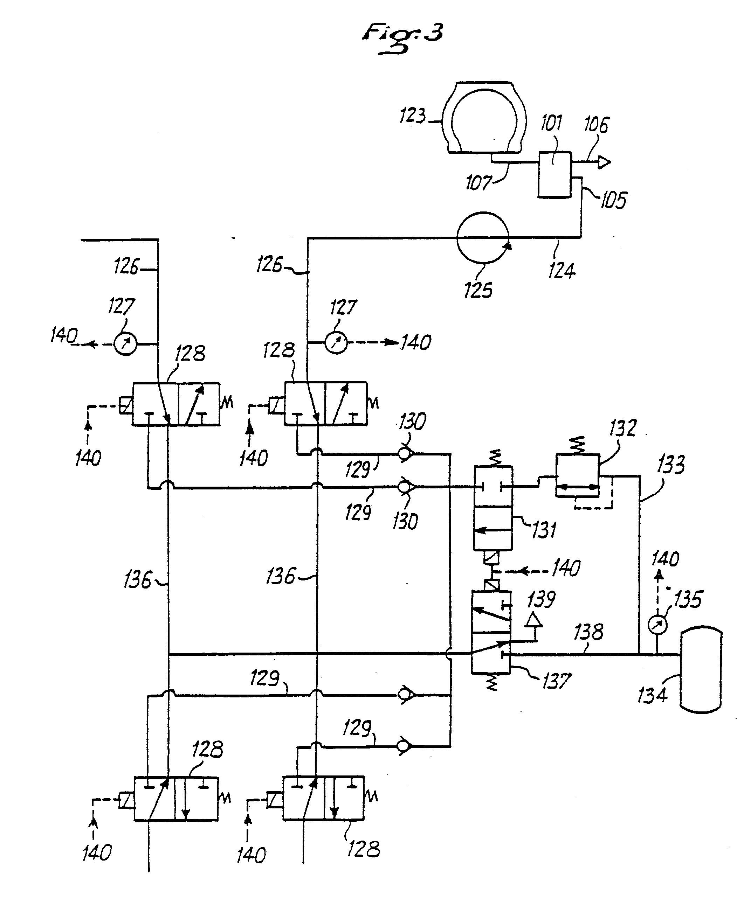

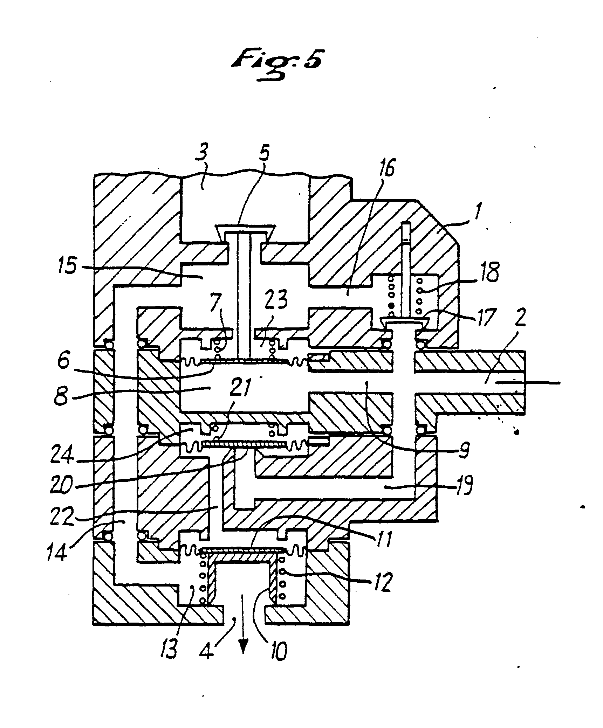

On se réfère maintenant aux figures 3 et 4.

Les différents pneumatiques, dont un seul est représenté en 123, et qui sont au nombre de 4 dans l'exemple décrit, sont associés chacun à un dispositif 101. L'orifice 105 du dispositif 101 est relié par une canalisation 124 à un joint d'étanchéité 125 tournant entre la jante et la fusée de roue permettant la liaison entre la canalisation 124 et une canalisation 126 montée sur le châssis du véhicule et reliée à un organe de mesure de pression 127 transformant le paramètre pression en un signal électrique, par exemple un voltage. La canalisation 126 aboutit à une électrovanne de sélection à trois voies 128 pilotée par le calculateur. L'une des voies de l'électrovanne 128 est reliée par une canalisation 129 et un clapet anti-retour 130 à une électrovanne de basse pression 131 commune aux quatre canalisations 129 et recevant la pression basse, par l'intermédiaire d'un régulateur de basse pression 132 et d'une canalisation 133, d'une source de pression 134 telle qu'un compresseur. Un organe de mesure de pression 135 permet au calculateur de connaître la pression dans la source 134. L'autre canalisation 136, formant la voie de gonflage et sortant de l'électrovanne 128, est reliée à une électrovanne de commande haute pression 137 à trois voies, la seconde voie étant reliée par la canalisation 138 à la source 134 et la troisième à une purge générale 139.

Les quatre électrovannes 128, de même que l'électrovanne basse pression 131 et l'électrovanne haute pression 137 sont commandées par le calculateur, lequel reçoit également les signaux électriques correspondant aux mesures de pression des quatre organes de mesure 127 de chacune des roues, et de l'organe de mesure 135 de la source de pression.

La source de pression, qui comporte en général un réservoir d'air comprimé, qui peut également servir à d'autres usages sur le véhicule, peut également être complétée par un petit réservoir supplémentaire de façon à autoriser une séquence de dégonflage en cas de panne de la source.

Le calculateur 140 comporte un panneau de commande 141 muni de boutons, à savoir quatre boutons correspondant chacun à un niveau de gonflage préréglé, à savoir les niveaux P1, P2, P3 et P4, ce panneau étant commandé par le pilote du véhicule. Le calculateur comporte d'autre part un organe de calcul 142 sensible aux différentes valeurs de signal de pression qui lui parviennent des capteurs 127 par l'intermédiaire d'un adaptateur de signal de pression 143, d'un convertisseur analogique-digital 144 et d'un bus 145. Les signaux de commande sortant de l'organe de calcul 142 sont adressés par des voies 146 à une interface de pilotage de vannes 147 et, de là, aux bobines de commande des électrovannes. Une alimentation stabilisée 24 volts, 148, alimente l'ensemble du calculateur.

Le fonctionnement est le suivant :

On suppose que les quatre roues du véhicule sont gonflées normalement à l'un des niveaux précités, par exemple P2 (roulage tout terrain facile). Le dispositif 101 se trouve dans l'état représenté sur la figure 1. Les canalisations 126 sont reliées par les vannes 128 aux canalisations 136 et de là à l'électrovanne 137 ouverte sur la purge générale.

Pour provoquer une mesure de pression des pneumatiques, on relie l'électrovanne 137 à la source de pression 134 et on adresse une brève impulsion de pression élevée, laquelle parvient au dispositif 101 et provoque, comme cela a été vu, l'ouverture de la vanne 115. On bascule alors immédiatement l'électrovanne 128 du pneumatique sur la conduite 129, après quoi on cesse l'envoi de la forte pression en remettant l'électrovanne 137 à la purge. Le clapet 115 étant ouvert, la pression du pneumatique va s'installer dans les canalisations 126 et 129 jusqu'au clapet 130 et la mesure sera faite par l'organe 127. On rebascule l'électrovanne 128 pour la mettre en liaison avec la canalisation 136 et la purge, et le système revient à son état initial.

Pour atteindre un niveau de pression moins élevé, par exemple P3 (roulage sable et neige), et donc pour dégonfler les pneumatiques, on affiche sur le panneau de commande la valeur de pression P3 souhaitée dans lesdits pneumatiques. Le calculateur provoque tout d'abord la séquence de mesure précitée. Connaissant alors les valeurs de la pression dans les différents pneumatiques, il en déduit les temps nécessaires au dégonflage pour atteindre la valeur de la pression plus basse que l'on souhaite dans les pneumatiques, en fonction d'un algorithme préalablement mémorisé. En effet, la durée du dégonflage entre une pression de départ et une pression d'arrivée est pratiquement indépendante des autres considérations. Le calculateur adresse alors aux pneumatiques la pression basse par le biais de l'électrovanne 131 et des électrovannes 128, mises dans la bonne position et ce, pendant les durées précédemment calculées. A la fin de chaque durée, l'électrovanne de sélection 128 concernée est immédiatement rebasculée sur la canalisation 136 et la purge.

Pour le gonflage, par exemple partant du niveau P3 pour arriver au niveau P2, on commence également par l'étape de mesure de pression précitée. Le calculateur déduit les durées du gonflage pour chaque pneumatique. Après cela, les électrovannes 128 étant en relation avec la canalisation 136, il ouvre l'électrovanne 137 reliée à la source 134. A la fin de chaque durée précalculée, l'électrovanne 128 concernée est rebasculée pour la mise en liaison avec la canalisation 129 et l'on procède à une nouvelle mesure. Si cette mesure concorde avec la valeur de pression que l'on souhaite dans le pneumatique, le processus s'arrête pour le pneumatique considéré en reliant sa vanne 128 à l'électrovanne 131. Sinon, une nouvelle durée, bien sûr plus courte, est déterminée et une nouvelle phase de gonflage (ou de dégonflage) a lieu et ainsi de suite.

Il en résulte que, d'une façon générale, la phase de gonflage est plus longue que la phase de dégonflage, laquelle ne demande qu'une seule mesure initiale. Ceci n'est cependant pas gênant car, dans la pratique, il importe de pouvoir dégonfler rapidement les roues lorsqu'un véhicule veut quitter par exemple, une route à revêtement dur pour un terrain meuble sur lequel il ne peut se déplacer qu'avec les roues dégonflées alors que, lorsqu'il rejoint un revêtement dur depuis un terrain meuble, il peut continuer sa route avant que la valeur de pression élevée dans le pneumatique ne soit atteinte.

De préférence, en utilisation normale, on provoque régulièrement, par exemple toutes les cinq minutes, une phase de mesure, ce qui permet de contrôler l'état des pneumatiques et prendre les décisions qui conviennent, s'il y a lieu. En outre, le bref échappement qui se produit au début de chaque phase de mesure, provoque un nettoyage répété de l'orifice d'échappement.

On se réfère à la figure 5.

Le dispositif représenté présente un corps ou boîtier 1, de préférence métallique, muni de trois orifices, à savoir un orifice d'admission 2, un orifice d'utilisation 3 et un orifice d'échappement 4. L'orifice d'admission est destiné à être relié, par exemple par une canalisation, à des moyens permettant d'y établir deux états de pression, à savoir une pression basse et une pression élevée, et ceci pendant une durée de préférence réglable et pouvant être longue. En l'absence de haute ou de basse pression, cette canalisation et l'orifice de ce trou sont mis à la pression ambiante, par exemple à la pression atmosphérique, elle-même inférieure à la basse pression.

L'orifice 2 est constamment ouvert alors que l'orifice 3 est normalement refermé par un clapet 5 relié par une tige usuelle à une membrane 6 d'actionnement de clapet, elle-même repoussée en position de fermeture par un ressort de rappel 7 agissant sur l'une des faces de la membrane. En conséquence, le clapet est normalement fermé sous l'effet du ressort 7 et sous l'effet de la pression élevée régnant normalement en aval de l'orifice 3 dans le volume d'utilisation tel que pneumatique ou vérin qu'il dessert. La face active de la membrane 6 forme une des parois d'une chambre de commande 8 reliée directement par un passage 9 à l'orifice 2.

L'orifice d'échappement 4 est normalement ouvert et peut être obturé par un clapet d'échappement 10 susceptible d'être actionné, pour la fermeture, par une membrane 11 normalement sollicitée vers la position d'ouverture du clapet 10 par un ressort de rappel 12. Le clapet d'échappement 10 se déplace dans une chambre 13 reliée par un passage 14 à une chambre 15 disposée juste en amont de l'orifice d'utilisation 3 et de son clapet 5. Cette chambre 15 est également reliée, par un passage 16, au passage 9 et à l'orifice 2, et ceci par l'intermédiaire d'un clapet taré 17 normalement en position fermée sous l'action d'un ressort taré 18 suffisamment puissant pour rester fermé à la pression ambiante et à la pression basse mais susceptible de s'ouvrir lorsque s'établit dans le passage 9 la pression élevée.

Un autre passage 19, partant du passage 9 relié à l'orifice 2, aboutit à un clapet de pilotage 20 normalement fermé par un ressort 21 et qui, s'il est ouvert, permet au passage 19 de communiquer, par un passage 22, avec la face active de la membrane 11.

Enfin des passages non représentés permettent de mettre à la pression ambiante, par exemple la pression atmosphérique, les chambres mortes, c'est-à-dire la chambre 23 qui contient le ressort 7 de la membrane 6, et la chambre 24 qui contient le ressort 21. Un clapet anti-retour peut protéger ces derniers passages de souillures de l'environnement extérieur.

On va maintenant décrire le fonctionnement de ce dispositif en admettant que l'orifice 3 soit relié à l'intérieur de la chambre d'un pneumatique de véhicule, auquel cas le fluide utilisé est de préférence un gaz tel que de l'air, mais la même description s'appliquerait au cas par exemple où le dispositif servirait à piloter un vérin à la place d'un pneumatique.

Le dispositif selon l'invention est susceptible de prendre trois états stables, à savoir l'état de repos, l'état de dégonflage et l'état de gonflage. A l'état de repos comme cela est vu, la pression atmosphérique règne dans l'ensemble du dispositif et le clapet 5 est en position fermée sous l'action de la pression du pneumatique dans l'orifice 3 et du ressort 7. Le clapet d'échappement 10 est ouvert, contrairement à la position représentée sur la figure, et ceci par le ressort 12. Le clapet 20 est en position fermée sous l'effet du ressort 21.

Pour provoquer l'état de dégonflage à partir de l'état de repos, on alimente l'orifice 2 en basse pression, cette basse pression étant bien entendu supérieure à la pression atmosphérique. Cette basse pression, qui est insuffisante pour ouvrir le clapet 17 normalement fermé par son ressort 18, s'instaure dans la chambre 8 et provoque l'ouverture du clapet 5 et par conséquent l'échappement du fluide contenu dans le pneumatique qui, passant par la chambre 15, traverse le passage 14 puis la chambre 13 et s'échappe par l'orifice 4. Pendant ce temps, le clapet 20 reste en position fermée, la basse pression qui s'instaure dans le passage 19 étant insuffisante pour vaincre la force du ressort 21.

Lorsque la basse pression est interrompue, le clapet 5 se referme et le dispositif se retrouve à l'état de repos.

Pour instaurer l'état de gonflage, on injecte une pression élevée dans l'orifice 2, cette pression élevée pouvant être celle du fluide de gonflage. L'établissement de la pression élevée par le passage 9 et la chambre 8 provoque l'ouverture du clapet 5 et également par le passage 19, l'ouverture du clapet 20 de sorte que la pression parvient, par le passage 22, sur la membrane 11, ce qui provoque la fermeture du clapet d'échappement 10. Peu après, au cours de la montée en pression, le clapet 17 est repoussé et le fluide sous pression pénètre par le passage 16 dans la chambre 15 et de là, par le clapet 5 qui est ouvert, dans l'orifice 3 et dans le pneumatique, l'échappement étant rendu impossible par la fermeture préalable du clapet 10. Le gonflage se poursuit alors tant que la pression élevée se trouvera maintenue. Lorsque cette pression est interrompue, les différents clapets se déplacent en sens contraire et l'état de repos se retrouve instauré, le dispositif se trouvant purgé par l'ouverture du clapet d'échappement. De façon plus détaillée, la suppression de la haute pression provoque la fermeture du clapet 17 puis la fermeture du clapet 20 et par conséquent l'ouverture du clapet d'échappement 10 de sorte que le fluide sous pression dans la chambre 15, le passage 14 et la chambre 13, s'échappe par l'orifice 4, une légère fuite ayant lieu hors du pneumatique jusqu'au moment où l'abaissement de la pression permet la fermeture du clapet 5. Ceci est obtenu grâce au rapport de surfaces convenable entre la surface active extérieure de la membrane de clapet 20 et celle du conduit 19 et en choisissant convenablement la force du ressort 21.

On va maintenant décrire plus en détail une forme de réalisation pratique de ce dispositif et son application au gonflage sélectif, à l'arrêt ou en marche, d'un véhicule à roues multiples.

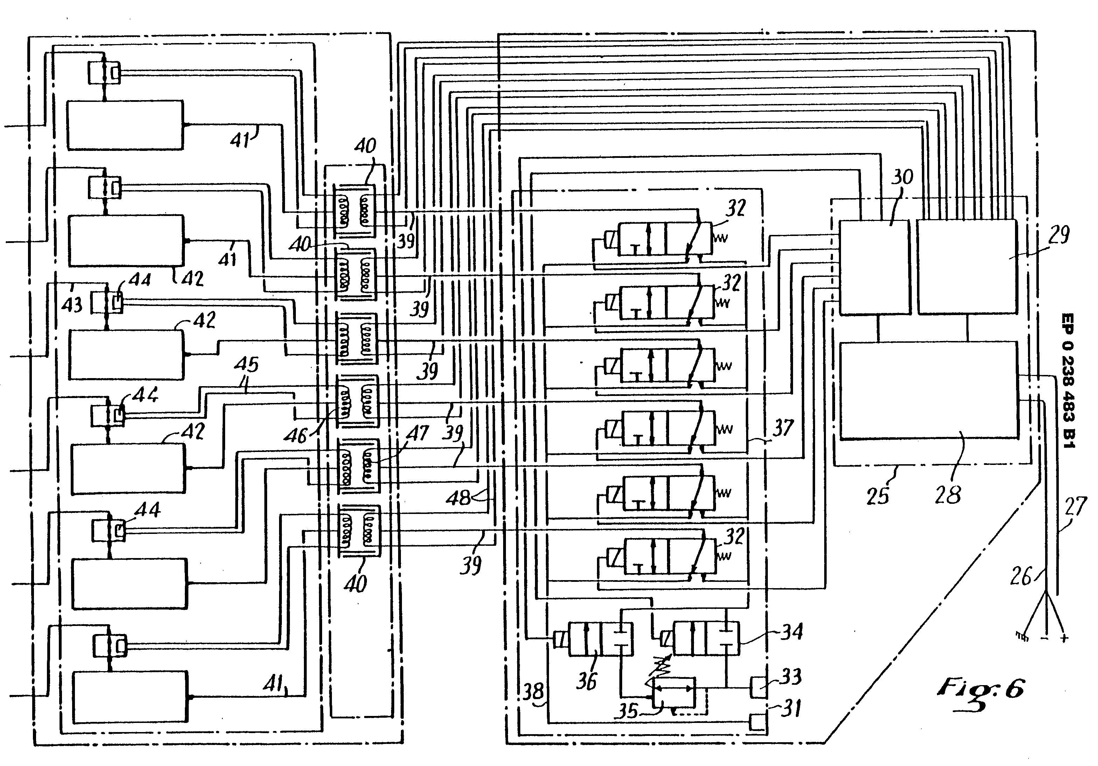

On se réfère à la figure 6.

L'agencement de gonflage et dégonflage est placé sur un véhicule à six roues. Il comporte une unité électronique de commande 25 alimentée par une ligne d'alimentation électrique 26 et susceptible de recevoir, par les entrées 27, les ordres du pilote du véhicule à partir de boutons, manettes etc... en soi connus. L'unité 25 comporte un calculateur 28 alimenté par une unité de réception et analyse les pressions des pneumatiques 29 de façon à traiter ces informations et, en fonction des ordres reçus par la voie 27, à adresser des instructions à un générateur d'ordres de gonflage et dégonflage 30. Ce dernier pilote un ensemble de distribution pneumatique 31 comprenant six électrovannes de commande individuelle de pneumatique 32 à trois voies. La source de haute pression 33 est reliée d'une part à une électrovanne à deux voies 34 et d'autre part à un détendeur 35 relié à une seconde électrovanne à deux voies 36. Pour l'injection de la pression élevée dans un pneumatique donné, le calculateur pilotera donc l'électrovanne 34 qui amènera la pression élevée par un conduit de distribution commun 37 aux différentes électrovannes de commande de pneumatique 32 dont seules celles qui sont actionnées par le calculateur permettront le passage de la pression élevée vers leurs pneumatiques respectifs. Au contraire pour l'envoi d'un ordre de basse pression, le calculateur 28 actionne l'électrovanne 36 qui, alimentée à basse pression par l'intermédiaire du détendeur 35, distribue la basse pression à nouveau par la ligne 37 et de là, par la ou les électrovannes 32 commandées, aux pneumatiques concernés.

La purge des électrovannes 32 s'effectue par un collecteur commun 38.

De chaque électrovanne de distribution 32 s'étend une canalisation 39 qui aboutit dans la partie centrale de l'essieu de la roue correspondante et est reliée, par l'intermédiaire d'un joint tournant usuel 40, à une canalisation de roue 41, laquelle s'étend radialement vers un dispositif de commande 42 du type décrit ci-dessus.

Le dispositif 42 est, sur chacune des roues, relié à l'intérieur de la chambre de pneumatique par l'intermédiaire d'un conduit 43 dans lequel est disposé un capteur de pression 44 d'un type décrit par exemple dans le brevet français n° 2 497 342 déposé par la déposante. Ce capteur de pression comporte son propre circuit d'exploitation et transmet les signaux qu'il mesure par des conducteurs de roue 45 au secondaire 46 d'un transformateur tournant disposé au niveau du joint tournant 40 et dont le primaire fixe 47, disposé en regard, est relié par des conducteurs électriques 48 à l'unité de réception et analyse les pressions des pneumatiques 29.

Il est ainsi possible d'assurer le gonflage et le dégonflage des roues individuellement, et ceci sans avoir à maintenir constamment une pression dans les canalisations 39, 41 et le joint tournant 40, tout en contrôlant constamment l'état de la pression dans toutes les roues du véhicule, permettant par exemple de réaliser un asservissement à une valeur de pression voulue par le biais du calculateur 28 tout en détectant les fuites et les crevaisons. L'échappement des différents pneumatiques s'effectue au niveau des dispositifs 42 sans aucune canalisation d'échappement, évitant tout risque de blocage d'échappement par givrage.

Le fonctionnement du dispositif est facilement compréhensible à la lecture du fonctionnement du dispositif des fig. 1 et 5 dans l'application selon l'invention au gonflage et au dégonflage de pneumatiques de véhicules. On peut indiquer à titre d'exemple les valeurs de pression suivantes :

Faible pression : 1,5 bar
Ouverture du clapet de pilotage 20 : 2,5 bars
Ouverture du clapet taré 17 : 3,8 bars
Forte pression à sa valeur maximale (gonflage) : 10 bars.

Bien que l'invention ait été décrite à propos de formes de réalisation particulières, il est bien entendu qu'elle n'y est nullement limité et qu'on peut lui apporter diverses modifications de formes ou de matériaux sans pour cela s'éloigner de ses revendications. Ainsi, par exemple, les électrovannes peuvent être remplacées par des vannes autrement commandées.

**Revendications**

1. Dispositif de commande de pression hydraulique ou pneumatique, du type destiné à être interposé entre une source de pression, une chambre d'utilisation et un échappement, pour permettre d'assurer, à volonté, l'envoi de fluide sous pression dans ladite chambre ou réservoir, et l'évacuation du fluide sous pression depuis ledit réservoir vers l'échappement, et comportant un premier orifice (2, 105) destiné à être relié à la source de pression, un second orifice (3, 107) destiné à être relié au réservoir d'utilisation, et un troisième orifice d'échappement (4, 106) des moyens sensibles à une première pression de pilotage, de valeur basse, pour relier le réservoir d'utilisation à l'échappement, et des moyens sensibles à une pression, de valeur élevée, pour mettre ledit second orifice (3, 107) en communication avec une source de pression et interdire une communication entre ledit orifice (3, 107) et l'orifice d'échappement (4, 106), caractérisé en ce qu'il comporte, dans un corps (11) muni desdits trois orifices et contenant lesdits moyens, un large passage d'échappement (14, 121) situé entre lesdits second orifice (3, 107) et troisième orifice (4, 106) et débouchant rapidement à l'extérieur, la communication entre ledit passage (14, 121) et ledit second orifice (3, 107), respectivement troisième orifice (4, 106) étant contrôlée par des moyens de vanne ou clapet (5, 118), respectivement (10, 110) donc l'un est normalement fermé, ainsi qu'une communication entre ledit premier orifice (2, 105) et ledit second orifice (3, 107) contrôlée par un moyen de vanne ou clapet (5-17, 115) normalement fermé et dont l'ouverture est contrôlée par des moyens de contrôle (6, 110-118) sensibles à la pression par ledit premier orifice (2, 105).

2. Dispositif selon la revendication 1, caractérisé en ce que ledit troisième orifice d'échappement (106) est normalement à l'état fermé par un clapet (110), ledit clapet étant sensible, pour son ouverture, à la pression établie dans une chambre de commande de clapet (109) susceptible d'être reliée aux moyens établissant la première pression basse de pilotage.

3. Dispositif selon l'une des revendications 1 et 2, caractérisé en ce qu'un passage (116) entre le premier orifice (105) et le second orifice (107) est normalement fermé par un clapet (115) soumis à une action de fermeture telle que la première pression basse de pilotage est incapable de provoquer son ouverture.

4. Dispositif selon la revendication 3, caractérisé en ce que le passage d'échappement (121) est susceptible d'être refermé par un clapet (118) insensible à la première pression basse de pilotage mais sensible à la seconde pression de valeur élevée pour le gonflage.

5. Dispositif selon la revendication 4, caractérisé en ce que ledit clapet (118) disposé dans le passage d'échappement (121) est mécaniquement solidaire du clapet (115) obturant le passage entre le premier orifice (105) et le second orifice (107), le passage entre le premier orifice et le second orifice étant ainsi fermé lorsque le passage entre le second orifice et l'orifice d'échappement est ouvert et inversement.

6. Dispositif selon l'une des revendications 3 à 5, caractérisé en ce que le passage (116) entre le premier orifice (105) et le second orifice (107) est conformé de façon que la haute pression parvienne avec un retard, au niveau dudit second orifice (107).

7. Dispositif selon l'une quelconque des revendications 1 à 6, caractérisé en ce qu'il comporte un corps formé d'un boîtier en deux parties (102, 103) disposées de part et d'autre d'une membrane (104) portant lesdits moyens sensibles à la pression ou clapets (110, 115, 118).

8. Dispositif selon la revendication 7, caractérisé en ce qu'un clapet d'échappement (110) est disposé d'un côté de la membrane (104) alors qu'une chambre de commande dudit clapet (109) est disposée de l'autre côté, ledit premier orifice (105) et un clapet (115) obturant le passage entre le premier orifice et le second étant disposés d'un côté de la membrane, alors que le second orifice (107) et un clapet (118) obturant le passage entre ledit second orifice (107) et le troisième orifice d'échappement (106) sont disposés de l'autre côté de la membrane.

9. Dispositif selon l'une au moins des revendications 2 à 8, caractérisé en ce que la chambre de commande de clapet (109) est reliée audit premier orifice (105) par un passage (108).

10. Dispositif selon la revendication 9, caractérisé en ce que ladite chambre de commande de clapet (109) est la seule chambre à purger du dispositif.

11. Dispositif selon la revendication 1, caractérisé en ce que ledit troisième orifice d'échappement (4) est normalement à l'état ouvert par un clapet (10), ledit clapet étant sensible, pour sa fermeture, à la pression établie dans une chambre de commande de clapet, par l'intermédiaire d'un moyen (20) empêchant la fermeture dudit clapet (10) dans le cas où la pression de valeur basse est amenée audit premier orifice (2), et autorisant ladite fermeture pour une valeur de pression élevée.

12. Dispositif selon la revendication 11, caractérisé en ce qu'il comporte un clapet d'utilisation (5) fermé à l'état de repos pour obturer ledit second orifice (3), ledit clapet étant sensible à l'action d'une pression basse ou élevée établie dans une chambre de commande (8) reliée directement au premier orifice (2), un clapet d'échappement (10) normalement ouvert mais susceptible d'obturer ledit troisième orifice (4) pour fermer un passage de liaison (14) entre le deuxième orifice (3) et le troisième (4), un clapet de pilotage (20) normalement fermé pour obturer un passage (19, 22) entre le premier orifice (2) et une chambre de pilotage du clapet d'échappement (10), et susceptible d'obturer ledit troisième orifice (4), et un clapet taré (17) obturant normalement un passage (16) entre ledit premier orifice (2) et ledit second orifice (3), et ne pouvant être ouvert que lorsque la pression atteint une valeur élevée suffisante, et ceci après que le clapet d'échappement (10) a été amené dans sa position fermée.

13. Dispositif selon l'une quelconque des revendications 1 à 12, caractérisé en ce que lesdits moyens de vanne ou clapet portent des clapets à membranes (6, 20, 11, 110, 115, 118).

14. Application du dispositif selon l'une quelconque des revendications 1 à 13, aux dispositifs de réglage de la pression de pneumatique de véhicule en marche, caractérisée en ce qu'un tel dispositif est monté sur chacune des roues portant un pneumatique ou un groupe de pneumatiques à gonfler.

15. Application selon la revendication 14, caractérisé en ce que le pneumatique muni dudit dispositif est relié, par un joint tournant (125), à une canalisation (129) reliée à des moyens (131) établissant la pression de pilotage de valeur basse, à des moyens (137) établissant la pression de valeur élevée, et à une purge générale (139).

16. Application selon l'une des revendications 14 et 15, caractérisée en ce que le dispositif est relié auxdits moyens (131, 137, 139) par l'intermédiaire d'une vanne de sélection.

17. Application selon l'une des revendications 15 et 16, caractérisée en ce qu'un organe de mesure de pression (127) est sensible à la valeur de la pression dans la canalisation (129).

18. Application selon l'une quelconque des revendications 14 à 17, caractérisée en ce qu'elle comporte sur un châssis de véhicule une source de pression (134) alimentant d'une part une électrovanne haute pression (137), d'autre part, par un régulateur basse pression (132), une électrovanne basse pression (131), ladite électrovanne haute pression (137) étant reliée à différentes électrovannes (128) de sélection attribuées à chaque pneumatique ou groupe de pneumatiques par un conduit de gonflage (136), ladite électrovanne basse pression (131) étant reliée également auxdites électrovannes propres à chaque pneumatique ou groupe de pneumatiques (128) par un second conduit (129), les électrovannes (128) étant reliées à la roue par l'intermédiaire d'un joint tournant (125).

19. Application selon la revendication 18, caractérisée en ce que les différents dispositifs (42) individuels sont reliés chacun, par une canalisation unique (41), à des moyens de commande centraux (25, 31) susceptibles d'être pilotés par un opérateur et reliés à une source d'air ou de fluide sous pression, lesdits moyens de commande centraux étant agencés pour pouvoir établir dans lesdites canalisations trois états, à savoir un état de repos dans lequel les canalisations sont à la pression ambiante, un état de basse pression supérieure à la pression ambiante et un état de pression élevée correspondant à la pression d'alimentation.

20. Application selon l'une quelconque des revendications 14 à 19, caractérisée en ce que les différentes électrovannes sont commandées par un calculateur central de commande (141) sensible aux organes de mesure de pression (127) et susceptible de commander lesdites électrovannes selon les séquences suivantes :

pour l'état de repos : établissement d'une liaison entre la canalisation (126) provenant de la roue et la purge générale (139) ;

pour la mesure de pression : envoi d'une impulsion haute pression dans la canalisation (126) conduisant à la roue, puis blocage de ladite canalisation (126), et mesure de la pression au niveau de ladite canalisation ;

pour le dégonflage : mesure de la pression au niveau de la canalisation de roue (126) puis envoi d'une impulsion de basse pression dans la canalisation de roue (126) pendant une durée déterminée ;

pour le gonflage : mesure de la pression au niveau de la canalisation de roue (126) puis envoi d'une haute pression dans la canalisation de roue pendant une durée déterminée, puis mesure et, s'il y a lieu, ajustement par gonflage ou dégonflage successif.

21. Application selon la revendication 20, caractérisée en ce que le calculateur central est agencé pour calculer, en fonction de la pression mesurée dans la roue et d'une pression de gonflage ou dégonflage, une durée déterminée en fonction d'un algorithme mémorisé, durée pendant laquelle on effectue une phase de gonflage ou de dégonflage.

## Claims

1. A device for controlling a hydraulic or pneumatic pressure, of the type adapted to be interposed between a source of pressure, a utilization chamber and an escape, to permit ensuring at will the feeding of a fluid under pressure to said chamber or reservoir and the discharge of the fluid under pressure from said reservoir to the escape and comprising a first orifice (2, 105) for connection to the source of pressure, a second orifice (3, 107) for communication to the utilization reservoir, and a third escape orifice (4, 106), means responsive to a first control pressure of low value for connecting the utilization reservoir to the escape and means responsive to a pressure of high value for putting said second orifice (3, 107) in communication with a source of pressure and precluding a communication between said orifice (3, 107) and the escape orifice (4, 106), characterised in that it includes, in a body (11) provided with said three orifices and accommodating said means, an escape passage (14, 121) of large cross-section between said second orifice (3, 107) and third orifice (4, 106) and ending shortly to the exterior, the communication between said passage (14, 121) and respectively said second orifice (3, 107) and said third orifice (4, 106) being controlled by respective valve means (5, 118 ; 10, 110) of which one is normally closed, and a communication between said first orifice (2, 105) and said second orifice (3, 107) which is controlled by a normally closed valve means (5-17, 115) and the opening of which is controlled by control means (6, 110-118) sensitive to the pressure at said second orifice (2, 105).

2. A device according to claim 1, characterised in that said third escape orifice (106) is normally in the closed state by the action of a valve (110), said valve being responsive for its opening to the pressure established in a valve control chamber (109) capable of being connected to the means establishing the first low control pressure.

3. A device according to claim 1 or 2, characterised in that a passage (116) between the first orifice (105) and the second orifice (107) is normally closed by a valve (115) subjected to a closing action such that the first low control pressure is incapable of causing its opening.

4. A device according to claim 3, characterised in that the escape passage (121) is capable of being closed by a valve (118) which is not responsive to the first low control pressure but responsive to the second pressure of high value for the inflation.

5. A device according to claim 4, characterised in that said valve (118) disposed in the escape passage (121) is mechanically connected to the valve (115) closing the passage between the first orifice (105) and the second orifice (107), the passage between the first orifice and the second orifice being thus closed when the passage between the second orifice and the escape orifice is open and vice versa.

6. A device according to any one of the claims 3 to 5, characterised in that the passage (116) between the first orifice (105) and the second orifice (107) is so arranged that the high pressure reaches the region of said second orifice (107) with a delay.

7. A device according to any one of the claims 1 to 6, characterised in that it comprises a body formed by a housing in two parts (102, 103) disposed on each side of a diaphragm (104) carrying said means responsive to the pressure or valves (110, 115, 118).

8. A device according to claim 7, characterised in that an escape valve (110) is disposed on one side of the diaphragm (104) while a chamber controlling said valve (109) is disposed on the other side, said first orifice (105) and a valve (115) closing the passage between the first orifice and the second orifice being disposed on one side of the diaphragm whereas the second orifice (107) and a valve (118) closing the passage between said second orifice (107) and the third escape orifice (106) are disposed on the other side of the diaphragm.

9. A device according to any one of the claims 2 to 8, characterised in that the valve control chamber (109) is connected to said first orifice (105) through a passage (108).

10. A device according to claim 9, characterised in that said valve control chamber (109) is the sole chamber of the device to be purged.

11. A device according to claim 1, characterised in that said third escape orifice (4) is normally in the closed state through a valve (10), said valve being responsive, for its closing, to a pressure established in a valve control chamber through a means (20) precluding the closure of said valve (10) in the event of the low value pressure being supplied to said first orifice (2) and permitting the said closure for a high pressure value.

12. A device according to claim 11, characterised in that it comprises a utilization valve (5) closed in the state of rest for closing said second orifice (3), said valve being responsive to the action of a low or high pressure established in a control chamber (8) directly connected to the first orifice (2), an escape valve (10) which is normally open but is capable of closing said third orifice (4) for closing a connection passage (14) between the second orifice (3) and the third orifice (4), a normally-closed control valve (20) for closing a passage (19, 22) between the first orifice (2) and a control chamber of the escape valve (10), and capable of closing said third orifice (4) and a calibrated valve (17) normally closing a passage (16) between said first orifice (2) and said second orifice (3), and only capable of being opened when the pressure reaches a sufficiently high value after the escape valve (10) has been brought to its closed position.

13. A device according to any one of the claims 1 to 12, characterised in that said valve means comprise diaphragm valves (6, 20, 11, 110, 115, 118).

14. An application of the device according to any one of the claims 1 to 13 to the system regulating the pressure of pneumatic tires of vehicles in motion, characterised in that such a device is mounted on each of the wheels carrying a tire or a group of tires to be inflated.

15. An application according to claim 14, characterised in that the tire provided with said device is connected through a rotating coupling (125) to a pipe (129) connected to means (131) establishing the control pressure of low value, to means (137) establishing the pressure of high value, and to a general purge (139).

16. An application according to claim 14 or 15, characterised in that the device is connected to said means (131, 137, 139) through a selecting valve.

17. An application according to claim 15 or 16, characterised in that a pressure-measuring unit (127) is responsive to the value of the pressure in the pipe (129).

18. An application according to any one of the claims 14 to 17, characterised in that it comprises on a vehicle chassis, a source of pressure (134) supplying pressure, on one hand, to a high-pressure electrovalve (137), and, on the other hand, through a low-pressure regulator (132), to a low-pressure electrovalve (131), said high-pressure electrovalve (137) being connected to various selecting electrovalves (128) assigned to each tire or group of tires through an inflation conduit (136), said low-pressure electrovalve (131) being connected also to said electrovalves pertaining to each tire or group of tires (128) through a second conduit (129), the electrovalves (128) being connected to the wheel through a rotating coupling (125).

19. An application according to claim 18, characterised in that the various individual devices (42) are each connected through a single pipe (41) to central control means (25, 31) capable of being controlled by an operator and connected to a source of air or fluid under pressure, said central control means being so arranged as to be capable of establishing three states in said pipes, namely a state of rest in which the pipes are at ambient pressure, a state of low pressure higher than the ambient pressure, and a state of high pressure corresponding to the supply pressure.

20. An application according to any one of the claims 14 to 19, characterised in that the various electrovalves are controlled by a central control calculator (141) responsive to the pressure-measuring units (127) and capable of controlling said electrovalves in accordance with the following sequences:

for the state of rest: the establishment of a connection between the pipe (126) coming from the wheel and the general purge (139);

for measuring pressure: the feeding of a high pressure pulse in the pipe (126) leading to the wheel and then the blocking of said pipe (126) and the measuring of the pressure in the region of said pipe;

for the deflation: the measurement of the pressure in the region of the wheel pipe (126) and then the feeding of a low-pressure pulse into the wheel pipe (126) for a given duration;

for the inflation: the measurement of the pressure in the region of the wheel pipe (126) and then the feeding of a high pressure into the wheel pipe for a given duration, then measurement, and then, as the case may be, adjustment by successive inflation or deflation.

21. An application according to claim 20, characterised in that the central calculator is arranged to calculate, as a function of the pressure measured in the wheel and of an inflating or deflating pressure, a given duration as a function of a memorized algorithm, during which duration an inflating or deflating stage is effected.

**Patentansprüche**

1. Hydraulische oder pneumatische Drucksteuervorrichtung zum Zwischenschalten zwischen eine Druckquelle, einen Nutzraum und einen Auslass zum Sichern der willkürlichen Zufuhr eines Druckfluides zu diesem Raum oder Reservoir und zum Ableiten des Druckfluides aus dem Reservoir zum Auslass, mit einer ersten Öffnung (2, 105) zur Verbindung mit der Druckquelle, einer zweiten Öffnung (3, 107) zur Verbindung mit dem Nutzreservoir und einer dritten Öffnung (4, 106) für den Auslass, mit einer für einen ersten, der Regelung dienenden Druck geringen Wertes empfindlichen Einrichtung zum Verbinden des Nutzreservoirs mit dem Auslass, und mit einer für einen Druck höheren Wertes empfindlichen Einrichtung zum Verbinden der zweiten Öffnung (3, 107) mit der Druckquelle und zum Verhindern einer Verbindung zwischen dieser Öffnung (3, 107) und der Auslassöffnung (4, 106), dadurch gekennzeichnet, dass sie in einem die drei Öffnungen und die genannten Einrichtungen aufweisenden Körper (11) einen weiten Abflussdurchlass (14, 121) aufweist, der zwischen der zweiten Öffnung (3, 107) und der dritten Öffnung (4, 106) gelegen ist und rasch nach aussen führt, wobei die Verbindung zwischen diesem Durchlass (14, 121) und der zweiten Öffnung (3, 107) bzw. der dritten Öffnung (4, 106) mittels eines Ventiles bzw. einer Klappe (5, 118 bzw. 10, 110) gesteuert wird, wovon der eine Teil normalerweise geschlossen ist, ebenso wie eine Verbindung zwischen der ersten Öffnung (2, 105) und der zweiten Öffnung (3, 107) mittels eines normalerweise geschlossenen Ventiles oder einer Klappe (5-17, 115) gesteuert wird, wobei das Öffnen desselben bzw. derselben durch eine druckempfindliche Steuereinrichtung (6, 110-118) über die erste Öffnung (2, 105) gesteuert wird.

2. Vorrichtung nach Anspruch 1, dadurch gekennzeichnet, dass die dritte Öffnung (106) für den Auslass normalerweise durch ein Ventil (110) geschlossen ist, das zum Öffnen auf den Druck in einer Ventilsteuerkammer (109) auftretenden Druck anspricht, die an die den geringen, der Regelung dienenden Druck erzeugende Einrichtung anschliessbar ist.

3. Vorrichtung nach Anspruch 1 oder 2, dadurch gekennzeichnet, dass ein Durchlass (116) zwischen der ersten Öffnung (105) und der zweiten Öffnung (107) normalerweise durch ein Ventil (115) geschlossen ist, welches einem Schliessdruck derart ausgesetzt ist, dass es dem ersten, der Regelung dienenden, geringen Druck unmöglich ist, sein Öffnen zu bewirken.

4. Vorrichtung nach Anspruch 3, dadurch gekennzeichnet, dass der Abflussdurchlass (121) durch ein Ventil (118) wieder schliessbar ist, das bezüglich des ersten, der Regelung dienenden geringen Druckes unempfindlich ist, jedoch auf den zweiten Druck erhöhten Wertes für das Aufblasen anspricht.

5. Vorrichtung nach Anspruch 4, dadurch gekennzeichnet, dass das am Abflussdurchlass (121) angeordnete Ventil (118) mit dem den Durchlass zwischen der ersten Öffnung (105) und der zweiten Öffnung (107) sperrenden Ventil (115) mechanisch fest verbunden ist, wobei der Durchlass zwischen der ersten Öffnung und der zweiten Öffnung auf diese Weise geschlossen ist, wenn der Durchlass zwischen der zweiten Öffnung und der Auslassöffnung offen ist, und umgekehrt.

6. Vorrichtung nach einem der Ansprüche 3 bis 5, dadurch gekennzeichnet, dass der Durchlass (116) zwischen der ersten Öffnung (105) und der zweiten Öffnung (107) derart geformt ist, dass der hohe Druck das Niveau der zweiten Öffnung (107) mit Verzögerung erreicht.

7. Vorrichtung nach einem der Ansprüche 1 bis 6, dadurch gekennzeichnet, dass sie einen aus einem zweiteiligen Gehäuse (102, 103) gebildeten Körper aufweist, welche beiden Teile zu beiden Seiten einer Membrane (104) angeordnet sind, die die genannten druckempfindlichen Einrichtungen oder Ventile (110, 115, 118) trägt.

8. Vorrichtung nach Anspruch 7, dadurch gekennzeichnet, dass ein Auslassventil (110) an einer Seite der Membrane (104) angeordnet ist, wogegen eine Steuerkammer (109) für dieses Ventil an der anderen Seite liegt, wobei die erste Öffnung (105) und ein den Durchlass zwischen der ersten und der zweiten Öffnung verschliessendes Ventil (115) an der einen Seite der Membrane angeordnet sind, wogegen die zweite Öffnung (107) und ein den Durchlass zwischen der zweiten Öffnung (107) und der dritten, den Auslass bildenden Öffnung (106) verschliessendes Ventil (118) an der anderen Seite der Membrane liegen.

9. Vorrichtung nach wenigstens einem der Ansprüche 2 bis 8, dadurch gekennzeichnet, dass die Steuerkammer (109) für das Ventil mit der ersten Öffnung (105) über einen Durchlass (108) verbunden ist.

10. Vorrichtung nach Anspruch 9, dadurch gekennzeichnet, dass die Steuerkammer (109) für das Ventil die einzige Kammer zum Entleeren der Vorrichtung ist.

11. Vorrichtung nach Anspruch 1, dadurch gekennzeichnet, dass die dritte, den Auslass bildende Öffnung (4) über ein Ventil (10) normalerweise geöffnet ist, wobei das Ventil zum Schliessen empfindlich für den in der Ventilsteuerkammer herrschenden Druck mittels einer Einrichtung (20) ist, welche das Schliessen des Ventiles (10) in demjenigen Falle verhindert, in dem der Druck niedrigen Wertes an der ersten Öffnung (2) auftritt, und das Schliessen bei einem erhöhten Druckwert gestattet.

12. Vorrichtung nach Anspruch 11, dadurch gekennzeichnet, dass sie ein im Ruhezustand geschlossenes Nutzventil (5) zum Abschliessen der zweiten Öffnung (3) aufweist, das auf die Wirkung geringen oder erhöhten Druckes in einer mit der ersten Öffnung (2) direkt verbundenen Steuerkammer (8) anspricht, ferner ein normalerweise offenes Auslassventil (10), durch das die dritte Öffnung (4) zum Schliessen eines Verbindungsdurchlasses (14) zwischen der zweiten Öffnung (3) und der dritten (4) abdeckbar ist, sowie ein normalerweise geschlossenes Regelventil (20) zum Abdecken eines Durchlasses (19, 22) zwischen der ersten Öffnung und einer Steuerkammer für das Auslassventil (10), durch das die dritte Öffnung (4) abdeckbar ist, und schliesslich ein tariertes Ventil (17), das normalerweise einen Durchlass (16) zwischen der ersten Öffnung (2) und der zweiten Öffnung (3) verschliesst und nur zu öffnen ist, wenn der Druck einen genügend hohen Wert erreicht, und dies nachdem das Auslassventil (10) in seine Schliesslage gelangt ist.

13. Vorrichtung nach einem der Ansprüche 1 bis 12, dadurch gekennzeichnet, dass die Ventil- oder Klappeneinrichtungen Membranventile (6, 20, 11, 110, 115, 118) aufweisen.

14. Verwendung bzw. Anbringung der Vorrichtung nach einem der Ansprüche 1 bis 13 für bzw. an Reifendrucksteuervorrichtungen für fahrende Fahrzeuge, dadurch gekennzeichnet, dass eine solche Vorrichtung an jedem der einen aufblasbaren Reifen oder eine Reifengruppe tragenden Räder montiert ist.

15. Verwendung nach Anspruch 14, dadurch gekennzeichnet, dass der mit der Vorrichtung versehene Reifen über eine Dreheinführung (125) mit einem Kanal (129) verbunden ist, der seinerseits an eine den Regeldruck geringen Wertes bereitstellende Einrichtung (131), an eine den Druck erhöhten Wertes bereitstellende Einrichtung (137) und an einen allgemeinen Auslass (139) angeschlossen ist.

16. Verwendung nach Anspruch 14 oder 15, dadurch gekennzeichnet, dass die Vorrichtung an die genannten Einrichtungen (131, 137, 138) über ein Weichenventil angeschlossen ist.

17. Verwendung nach Anspruch 15 oder 16, dadurch gekennzeichnet, dass ein Druckmessorgan (127) für den Wert des Druckes im Kanal (129) empfindlich ist.

18. Verwendung nach einem der Ansprüche 14 bis 17, dadurch gekennzeichnet, dass sie auf einem Fahrzeugchassis eine Druckquelle (134) aufweist, die einerseits ein Hochdruck-Elektroventil (137) und anderseits über einen Niederdruckregler (132) ein Niederdruck-Elektroventil (131) versorgt, wobei das Hochdruck-Elektroventil (137) mit verschiedenen Elektro-Weichenventilen (128) verbunden ist, die jeweils einem Reifen oder einer Reifengruppe über eine Aufblasleitung (136) zugeordnet sind, wogegen das Niederdruck-Elektroventil (131) über eine zweite Leitung (129) ebenfalls mit den jedem Reifen oder jeder Reifengruppe zugeordneten Elektroventilen (128) verbunden ist, welche Elektroventile (128) an des Rad über eine Dreheinführung (125) angeschlossen sind.

19. Verwendung nach Anspruch 18, dadurch gekennzeichnet, dass jede der einzelnen Vorrichtungen (42) über einen einzigen Kanal (41) an eine zentrale Steuereinrichtung (25, 31) angeschlossen ist, die durch eine Bedienungsperson einstellbar und mit einer Druckluft- oder Druckfluidquelle verbunden ist, und die zum Einstellen dreier Zustände innerhalb der genannten Kanäle ausgebildet ist, nämlich einem Ruhezustand, in dem sich die Kanäle unter Umgebungsdruck befinden, einem Zustand niedrigen, den Umgebungsdruck übersteigenden Druckes und einem Zustande erhöhten, dem Versorgungsdruck entsprechenden Druckes.

20. Verwendung nach einem der Ansprüche 14 bis 19, dadurch gekennzeichnet, dass die verschiedenen Elektroventile von einem zentralen Steuerrechner (141) gesteuert sind, der auf die Druckmessorgane (127) anspricht und durch den die Elektroventile gemäss den folgenden Sequenzen steuerbar sind :

für den Ruhezustand : Herstellung einer Verbindung zwischen dem vom Rad herausführenden Kanal (126) und dem allgemeinen Auslass (139) ;

für die Druckmessung : Aussendung eines Hochdruckimpulses in den zum Rad führenden Kanal (126), sodann Blockierung dieses Kanals (126) und Messung des Druckes in der Höhe dieses Kanals ;

zum Luftablassen : Messung des Druckes in der Höhe des Radkanales (126), dann Aussendung eines Niederdruckimpulses in den Radkanal (126) während einer vorbestimmten Dauer ;

zum Aufblasen : Messung des Druckes in Höhe des Radkanales (126), dann Aussendung eines Hochdruckes in den Radkanal während einer vorbestimmten Dauer, sodann Messung und gegebenenfalls Nacheinstellung durch darauffolgendes Aufblasen oder Luftablassen.

21. Verwendung nach Anspruch 20, dadurch gekennzeichnet, dass der zentrale Rechner zum Berechnen einer vorbestimmten Dauer für die Durchführung des Aufblasens oder Luftablessens auf Grund eines gespeicherten Algorithmus in Abhängigkeit von dem im Rad gemessenen Druck und eines Aufblas- oder Ablassdruckes ausgebildet ist.

Fig. 1

114 105 115 108    106 112 113 110 111

102

122

116

103

101

107 117 119 118 120 121    109 104

Fig. 2

105    108

102

116

106

107    121

Fig. 4

140

148

147    146    142    141

P1
P2
P3
P4

143    144    145

1

Fig: 3

## Fig. 5

Fig.6